# FASCICULE DE BREVET EUROPEEN

(11) **EP 3 243 007 B1**
(45) Date de publication et mention de la délivrance du brevet: **28.04.2021**
(21) Numéro de dépôt: 15808129.9
(22) Date de dépôt: 02.12.2015
(51) Int. Cl.: F04D 29/30, F01D 5/04, B64C 11/00

(54) **TURBO HÉLICO RÉACTEUR ALIMENTÉE**
ANGETRIEBENES TURBOPROP-TRIEBWERK
POWERED TURBOPROP ENGINE

(30) Priorité: 09.01.2015 FR 1500031
(43) Date de publication de la demande: 15.11.2017
(73) Titulaire: Carpyz SAS, 92136 Issy les Moulineaux (FR)
(72) Inventeur: CARROUSET, Pierre, 75015 Paris (FR); CARROUSET, Nicole, 75015 Paris (FR); CARROUSET, Gabrielle, 75015 Paris (FR)
(74) Mandataire: Dennemeyer & Associates S.A.
(86) Numéro de dépôt international: PCT/EP2015/078341
(87) Numéro de publication internationale: WO 2016/110364

(56) Documents cités:
- WO-A2-2007/023449
- DE-A1- 3 640 780
- GB-A- 2 388 406
- US-A- 3 283 509
- US-A1- 2003 147 745
- US-B1- 7 044 718

## Description

L'amélioration de la poussée axiale des hélices est recherchée depuis longtemps et les demandes récentes de délivrances de Brevets en France dont en particulier ceux publiés sous les N° Fr 2 987 655 du 07 10 2012 N° Fr 2 987 656 du 15 10 2012 montrent un nouveau principe qui consiste à prendre le fluide au centre à l'entrée d'une roue et à le faire traverser les pales des hélices qui sont creuses en bénéficiant de la force centrifuge et aboutir dans une chambre circulaire périphérique pourvue d'un orifice circulaire qui éjecte le fluide vers le dessous de la roue en créant une force de réaction par appui sur les couches limites de fluide situées à proximité. L'addition des trois principes permet d'augmenter de façon sensible la poussée axiale d'autant plus qu'elle est augmentable de façon énorme par un fluide énergétique introduit par l'arbre dans le réacteur tel que de l'air comprimé voire de l'hydrogène comme pour les fusées.

Les spécimens réalisés de façon artisanale ne permettaient pas une industrialisation de ces produits et il aura fallu quelques années de travail pour découvrir une méthode qui permet de construire à l'écran de façon plus logique et technique ces produits de formes très complexes et de les faire évoluer plus facilement. Les machines additives qui reçoivent les fichiers émis permettent la fabrication en quantité dans le monde entier de produits identiques conçus dans n'importe quel pays.

Nous n'avons pas trouvé dans le monde d'antériorité de produits équivalents à celui que nous décrivons maintenant.

La méthode de conception et de construction des roues, Turbines, Hélices, et Réacteurs, Alimentées, dont les pales des hélices sont creuses sur leur longueur et débouchent dans une chambre périphérique pourvue d'un orifice circulaire, fait que les fibres neutres des lames des pales creuses des hélices, sont chacune construites individuellement a l'écran, sur des sections de roues placées à des diamètres différents, en utilisant des éléments géométriques qui sont numérisés avec des valeurs fondamentales de base qui sont fournies au départ par le concepteur pour la construction de la roue.

*Cette méthode de conception et de construction pour les roues qui sont simultanément : Turbine, Hélice à pales creuses sur toute leur longueur qui débouchent dans des chambres circulaires périphériques qui ont une fonction de Réacteur Alimentable (THRA)* est remarquable par le fait que pour chaque ensemble constitué Turbine, Hélice, Réacteur, les profils des fibres neutres des lames qui sont majoritairement des portions de cercles, sont construits pour l'entrée de la turbine et pour les entrées des pales creuses des hélices et leurs arrivées dans leurs chambres, et sont configurés individuellement en donnant au départ des valeurs aux éléments géométriques de base et sont tracés selon des dispositions géométriques particulières, sur des plateaux circulaires de diamètres différents qui eux sont ensuite disposés à plusieurs niveaux de la roue et sont positionnés angulairement sur le même axe indépendamment les uns des autres.

La disposition particulière des éléments géométriques de base appliquée sur chaque plateau circulaire est obtenue en étant inscrite dans un cercle (CI) dont le centre (0) d'où part un rayon (R) d'une valeur numérique donnée qui rejoint son cercle (CI) a un point d'intersection préférentiel (A).

Le cercle CI est la surface de révolution balayée par le bord d'attaque de la lame pendant la rotation de la roue. Une autre valeur numérique est donnée à la corde de l'arc qui est la portion de cercle de la fibre neutre de la lame recherchée.

L'une des extrémités de cette corde part du point d'intersection préférentiel (A) et l'autre (E) est positionné à l'intérieur du cercle sur un axe qui part du point préférentiel (A) et forme un angle de 45° avec le rayon (R). La position choisie pour cet axe à droite ou a gauche du rayon détermine le sens de rotation de la roue désiré (1 ou 2). Il est placé sur le rayon vers le centre un autre point (B) situé a une valeur numérique qui est celle du rayon du cercle qui entour la roue (CI) diminuée d'une valeur numérique qui est la racine carrée, de l'addition du carré de deux ½ corde (Pythagore).

Une droite de valeur numérique identique à celle de la corde est tirée depuis le point (B) et se confond en son milieu avec le milieu de la corde (M) avec laquelle elle est perpendiculaire et génère un point a son autre extrémité (D). Le point situé sur le rayon (B) sert de centre de valeur numérique égale à celle de la droite (A B) pour la portion de cercle qui va rejoindre les deux extrémités de la corde (A et E) qui est son arc et qui est le profile circulaire de la lame recherché. Le point situé à l'autre extrémité de la droite (D) qui coupe en son milieu la corde sert de centre pour tracer la portion de cercle qui va rejoindre les deux extrémités de la corde (A et E) qui est aussi son arc et qui est l'autre profile circulaire symétrique de la lame recherché.

Il est caractérisé en ce que d'autres centres de cercles placés sur la droite perpendiculaire (B D) et qui utilisent des valeurs de diamètre plus grandes ou plus petite que les points B et D leurs permettent de rejoindre ou non les extrémités de la droite (A E) et de générer des portions de cercles qui ont des profils plus plats ou plus bombés (PLI PL2) mais peuvent aussi bénéficier de la présente méthode. La portion de cercle PL2 n'est pas reliée aux points A et E La droite (A E) est aussi un profil de lame utilisable. Il est caractérisé que les profils construits avec cette méthode et avec les mêmes valeurs numériques de chaque coté du rayon sont symétriques.

Il est remarquable que le mixage des profils des lames obtenus avec cette méthode permet en jouant sur les paramètres de construire des pales évolutives qui ont des caractéristiques particulières.

Il est caractérisé que les valeurs numériques des profils des fibres neutres construits selon cette méthode sont mathématiquement quantifiables. Il est caractérisé qu'une même roue peut utiliser des profils de lames de turbines et des profils des lames pales d'hélices creuses différent qui sont définis avec la même méthode mais avec des profils différentes sur la même roue.

Cette méthode est remarquable par le fait que les plateaux qui reçoivent les profils des fibres neutres, qui sont déterminés précédemment, sont construits avec des valeurs numériques différentes de profils qui sont associés, mixées, partiellement superposées, enchevêtrées, concaves ou convexes ou solidarisées entre eux par la matière du plateau, pour construire les profils des lames nécessaires pour l'entrée du turbo et les pales creuses des hélices et l'entrée dans les chambres circulaires périphériques.

Quand les pales creuses ne permettent plus leur maintien entre elles par la matière du plateau, une bagues(CI) est rajoutée pour les solidarisées autour à l'extérieur du plateau (CO). A l'inverse quand les pales des hélices ne doivent pas être maintenues entre elles le plateau disparait avec le creux des pales et seules les profils des lames des pales qui sont alors habillés de matière subsistent et sont collés entre eux.

Il est remarquable que les creux des pales des hélices sont coupées par des portions de cercles concentriques à la roue et génèrent des conduits complémentaires internes aux pales d'hélices creuses qui débouchent chacun dans une chambre circulaire indépendante qui entour la totalité de la roue et qui est pourvue de préférence d'entretoises et d'une fente circulaire à profil en forme de buse.

En complément le conduit de la pale creuse de l'hélice reçoit des tubes qui proviennent de l'arbre central et qui continuent chacun dans la pale creuse ou les portions de pales creuses jusqu'à leur chambre circulaires périphériques individuelle.

Il faut remarquer la présence d'une chambre circulaire périphérique non rotative est placée avec un jeu à l'intérieur de celles qui sont rotatives et que cette chambre est intérieurement partagée en secteurs angulaires étanches entre eux, chacun d'eux étant alimenté par un conduit qui vient d'une bague fixe maintenue par un palier sur l'arbre, et qui redirige les conduits vers un endroit qui les centralise permet une alimentation de fluide vers chaque secteur.

De façon complémentaire pour certaines applications la roue est construite en plusieurs morceaux :
--- un premier ensemble solidaire indépendant est constitué par un premier plateau qui rejoint avec les lames nécessaires pour alimenter le turbo un deuxième plateau qui possède les ouvertures nécessaires pour l'alimentation les pales creuses des hélices
--- un deuxième ensemble solidaire indépendant est constitué par un troisième plateau d'où démarrent seules les lames des pales creuses des hélices qui vont ensuite rejoindre un quatrième plateau indépendant qui reçoit les lames des pales creuses des hélices avec les ouvertures nécessaires pour l'alimentation des chambres circulaires périphériques
--- un troisième ensemble solidaire indépendant est constitué par un cinquième plateau qui coiffe l'ensemble des chambres circulaires en concordance avec les alimentations fournies par le quatrième plateau sachant que les chambres ont des caractères et des choix de construction très vastes
--- d'autres plateaux sont aussi placés à la demande de façon intermédiaire au milieu des pales des hélices.

Une caractéristique importante de ces roues est que les plateaux ne sont pas de préférence des disques plats mais sont incurvés vers le haut ou vers le bas en forme de bol soit semi sphérique ou de tronc de cône, sur lesquels sont inscrites au plus proche de leurs plats respectifs, les entrées et les sorties des pales d'hélices.

Il est remarquable que les chambres rotatives ou non sont construites en matériaux résistants à la pression et à la température, soit en faisant évoluer progressivement la nature du matériau s'il est fritté soit en fabriquant les chambres indépendamment et en les rapportant après sous le plateau correspondant.

Il est important de signaler que la surface du conduit interne des pales est quantifiée au niveau de chaque plateau en employant le processus géométrique mathématique précédemment décrit et que ces valeurs sont ensuite appréciées entre elles pour déterminer le profil à donner au conduit interne de la pale sur sa longueur.

De préférence, la surface d'entrée du conduit interne des pales est quantifiée au niveau de chaque plateau en employant les processus géométriques mathématiques de I invention, et la surface d'entrée de chaque pale dépend, du nombre de pales choisi qui couvrent la surface du disque balayée par l'hélice sans qu'il y ait de préférence recouvrement des pales l'une sur l'autre, et de la longueur donnée à la corde contenue dans la pale et qu'une valeur de surface équivalente à celle de l'entrée du conduit est reportée pour la sortie de la pale de l'hélice en pénétrant dans la chambre circulaire, en affectant éventuellement cette surface d'un coefficient, et en utilisant les mêmes processus géométriques mathématiques pour écrire cette surface de sortie. Ces valeurs sont alors ensuite appréciées entre elles pour déterminer le profil à donner au conduit interne de la pale sur sa longueur.

Il est remarquable que la lame de l'intrados des pales de l'hélice est de préférence portée par une corde qui n'est plus à 45° et permet de séparer à volonté les lames extrados et intrados au niveau des bords d'attaques et de fuites en entrée et sortie du conduit de la pale, la rigidification de l'ensemble des lames de la pale étant assuré par des entretoises (PL3, PL4) en forme de virgule profilées et orientées placées entre les lames.

Une caractéristique préférée de cette méthode comporte le fait que les fibres neutres sont habillées de matière, en utilisant le principe du Brevet WO 2008/012425 qui construit l'aire d'une pale avec seulement 5 valeurs mathématiques données à des portions de figures géométriques qui ont un centre de référence, et sont placés de préférence en concordance, ou à proximité, des valeurs fournies par les fibres neutres générées selon la présente méthode. En particulier, les fibres neutres sont habillées de matière, en utilisant le principe donné par le Brevet WO 2008/012425, en employant comme base les valeurs numériques données par les fibres neutres pour placer la matière de part et d'autre de la fibre ou en la recouvrant au moins partiellement.

### DESSINS

Les dessins sont fournis à titre indicatif et sont schématisés et simplifiés afin d'illustrer au mieux les textes de la description et des revendications.

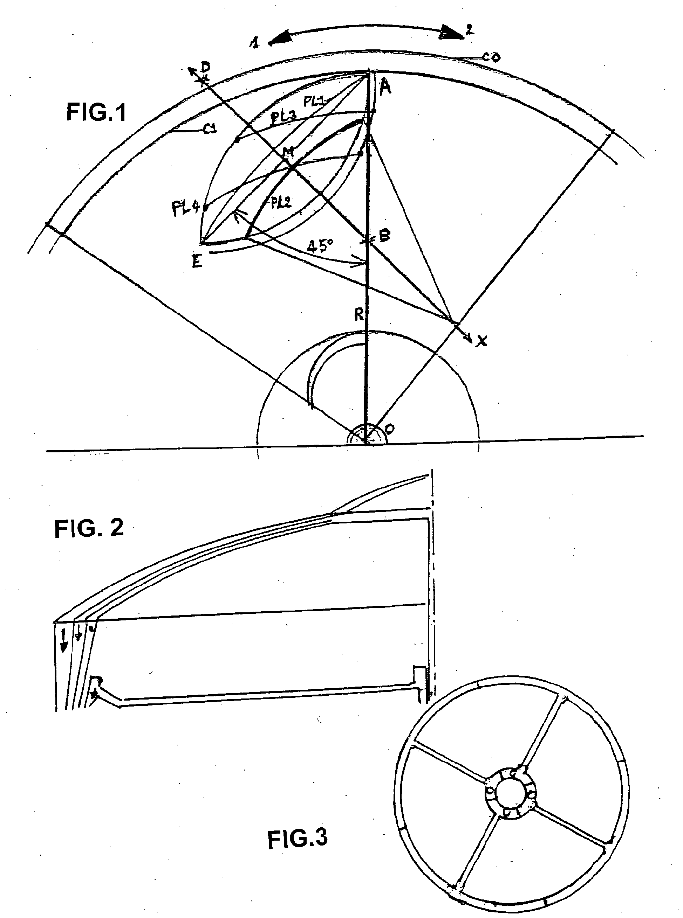

La figure 1 montre les éléments géométriques énoncés avec les lettres et les chiffres repères utilisés pour la Méthode.
La figure 2 montre des conduits cloisonnés par des portions de cercles intérieurs aux pales des hélices qui aboutissent chacune dans une chambre et à sa partie Inférieure une chambre circulaire indépendante alimentée depuis un palier fixe qui entoure l'arbre et qui reçoit un fluide.
La figure 3 montre vue de dessus la chambre circulaire cloisonnée fixe indépendante des autres rotatives qui l'entourent et son alimentation par une chambre palier fixe cloisonnée.

## Revendications

1. *Méthode de conception et de construction de roues qui sont simultanément* : *Turbine, Hélice à pales creuses sur toute leur longueur qui débouchent dans des chambres circulaires périphériques qui ont une fonction de Réacteur Alimentable (THRA)*, **caractérisée par le fait que** pour chaque ensemble Turbine, Hélice, Réacteur (THRA), cette méthode permet de construire avec des lames la section évolutive du conduit intérieur des pales des hélices qui sont creuses sur toute leur longueur, et sont appuyées sur les profils des fibres neutres des lames qui sont majoritairement des portions de cercles, et qui sont construits pour l'entrée de la turbine et pour les entrées des pales creuses des hélices et leurs arrivées dans leurs chambres, et sont configurés individuellement en donnant au départ des valeurs aux éléments géométriques de base et sont tracés selon des dispositions géométriques particulières, sur des plateaux circulaires de diamètres différents qui eux sont ensuite disposés à plusieurs niveaux de la roue et sont positionnés angulairement sur le même axe indépendamment les uns des autres, dans laquelle
la disposition particulière des éléments géométriques de base appliquée sur chaque plateau circulaire est obtenue en étant inscrite dans un cercle (C1) dont le centre (0) d'où part un rayon (R) d'une valeur numérique donnée qui rejoint son cercle (C1) a un point d'intersection préférentiel (A),
le cercle (C1) est la surface de révolution balayée par le bord d'attaque de la lame pendant la rotation de la roue,
une autre valeur numérique est donnée à la corde de l'arc qui est la portion de cercle de la fibre neutre de la lame recherchée, L'une des extrémités de cette corde part du point d'intersection préférentiel (A) et l'autre (E) est positionné à l'intérieur du cercle sur un axe qui part du point préférentiel (A) et forme un angle de 45° avec le rayon (R),
la position choisie pour cet axe à droite ou à gauche du rayon détermine le sens de rotation de la roue désiré (1 ou 2) qui est placé sur le rayon vers le centre un autre point (B) situé a une valeur numérique qui est celle du rayon du cercle qui entoure la roue (C1) diminuée d'une valeur numérique qui est la racine carrée, de l'addition du carré de deux ½ corde (Pythagore),
une droite de valeur numérique identique à celle de la corde est tirée depuis le point (B) et se confond en son milieu avec le milieu de la corde (M) avec laquelle elle est perpendiculaire et génère un point a son autre extrémité (D),
le point situé sur le rayon (B) sert de centre de valeur numérique égale à celle de la droite (A B) pour la portion de cercle qui va rejoindre les deux extrémités de la corde (A et E) qui est son arc et qui est le profile circulaire de la lame recherché, et
le point situé à l'autre extrémité de la droite (D) qui coupe en son milieu la corde sert de centre pour tracer la portion de cercle qui va rejoindre les deux extrémités de la corde (A et E) qui est aussi son arc et qui est l'autre profile circulaire symétrique de la lame recherché,
**caractérisée par le fait que** d'autres centres de cercles placés sur la droite perpendiculaire (B D) et qui utilisent des valeurs de diamètre plus grandes ou plus petite que les points B et D leurs permettent de rejoindre ou non les extrémités de la droite (A E) et de générer des portions de cercles qui ont des profils plus plats ou plus bombés (PL1 , PL2) mais peuvent aussi bénéficier de la présente méthode,
la portion de cercle (PL2) n'est pas reliée aux points A et E, la droite (A E) étant aussi un profil de lame utilisable,
**caractérisée par le fait que** les profils construits avec cette méthode et avec les mêmes valeurs numériques de chaque coté du rayon sont symétriques,
le mixage des profils des lames obtenus avec cette méthode permettant en jouant sur les paramètres de construire des pales évolutives qui ont des caractéristiques particulières,
**caractérisée par le fait que** les valeurs numériques des profils des fibres neutres construits selon cette méthode sont mathématiquement quantifiables, et
**caractérisée par le fait qu'**une même roue peut utiliser des profils de lames de turbines et des profils des lames pales d'hélices creuses différent qui sont définis avec la même méthode mais avec des profils différentes sur la même roue.

2. *Méthode de conception et de construction pour les roues THRA selon la revendication 1,* **caractérisée par le fait que** les plateaux qui reçoivent les profils des fibres neutres, déterminés selon la méthode décrite à la précédente revendication, sont construits avec des valeurs numériques différentes de profils qui sont associés, mixées, partiellement superposées, enchevêtrées, concaves ou convexes ou solidarisées entre eux par la matière du plateau, pour construire les profils des lames nécessaires pour l'entrée du turbo et les pales creuses des hélices et l'entrée dans les chambres circulaires périphériques, quand les pales creuses ne permettent plus leur maintien entre elles par la matière du plateau, une bague (C1) étant rajoutée pour les solidariser autour à l'extérieur du plateau (CO), et à l'inverse quand les pales des hélices ne doivent pas être maintenues entre elles le plateau disparait avec le creux des pales et seules les profils des lames des pales qui sont alors habillés de matière subsistent et sont collés entre eux.

3. *Méthode de conception et de construction pour les roues TRHA* selon l'une des revendications précédentes, **caractérisée par le fait que** les creux des pales des hélices sont coupées par des portions de cercles concentriques à la roue et génèrent des conduits complémentaires internes aux pales d'hélices creuses qui débouchent chacun dans une chambre circulaire indépendante qui entour la totalité de la roue et qui est pourvue de préférence d'entretoises et d'une fente circulaire à profil en forme de buse.

4. *Méthode de conception et de construction pour les roues TRHA* selon l'une des revendications précédentes, **caractérisée par le fait que** le conduit de la pale creuse de l'hélice reçoit des tubes qui proviennent de l'arbre central et qui continuent chacun dans la pale creuse ou les portions de pales creuses jusqu'à leur chambre circulaires périphériques individuelle.

5. *Méthode de conception et de construction pour les roues TRHA* selon l'une des revendications précédentes, **caractérisée par le fait qu'**une chambre circulaire périphérique non rotative est placée avec un jeu à l'intérieur de celles qui sont rotatives et que cette chambre est intérieurement partagée en secteurs angulaires étanches entre eux, chacun d'eux étant alimenté par un conduit qui vient d'une bague fixe maintenue par un palier sur l'arbre, et qui redirige les conduits vers un endroit qui les centralise permet une alimentation de fluide vers chaque secteur.

6. *Méthode de conception et de construction pour les roues TRHA* selon selon l'une des revendications précédentes , **caractérisée par le fait que** la roue est construite en plusieurs morceaux,
--- un premier ensemble solidaire indépendant est constitué par un premier plateau qui rejoint avec les lames nécessaires pour alimenter le turbo un deuxième plateau qui possède les ouvertures nécessaires pour l'alimentation les pales creuses des hélices,
--- un deuxième ensemble solidaire indépendant est constitué par un troisième plateau d'où démarrent seules les lames des pales creuses des hélices qui vont ensuite rejoindre un quatrième plateau indépendant qui reçoit les lames des pales creuses des hélices avec les ouvertures nécessaires pour l'alimentation des chambres circulaires périphériques,
--- un troisième ensemble solidaire indépendant est constitué par un cinquième plateau qui coiffe l'ensemble des chambres circulaires en concordance avec les alimentations fournies par le quatrième plateau sachant que les chambres ont des caractères et des choix de construction très vastes,
--- d'autres plateaux sont aussi placés à la demande de façon intermédiaire au milieu des pales des hélices,
les chambres rotatives ou non étant construites en matériaux résistants à la pression et à la température, soit en faisant évoluer progressivement la nature du matériau s'il est fritte soit en fabriquant les chambres indépendamment et en les rapportant après sous le plateau correspondant.

7. *Méthode de conception et de construction pour les roues TRHA* selon l'une des revendications 1 à 6, **caractérisée par le fait que** les plateaux ne sont pas des disques plats mais sont de préférence incurvés vers le haut ou vers le bas eh forme de bol soit semi sphérique ou de tronc de cône, sur lesquels sont inscrites au plus proche de leurs plats respectifs, les entrées et les sorties des pales d'hélices.

8. *Méthode de conception et de construction pour les roues TRHA* selon l'une des revendications 1 à 6, **caractérisée par le fait que** la surface d'entrée du conduit interne des pales est quantifiée au niveau de chaque plateau en employant les processus géométriques mathématiques de la revendication 1 et que la surface d'entrée de chaque pale dépend, du nombre de pales choisi qui couvrent la surface du disque balayée par l'hélice sans qu'il y ait de préférence recouvrement des pales l'une sur l'autre, et de la longueur donnée à la corde contenue dans la pale et qu'une valeur de surface équivalente à celle de l'entrée du conduit est reportée pour la sortie de la pale de l'hélice en pénétrant dans la chambre circulaire, en affectant éventuellement cette surface d'un coefficient, et en utilisant les mêmes processus géométriques mathématiques pour écrire cette surface de sortie, ces valeurs étant ensuite appréciées entre elles pour déterminer le profil à donner au conduit interne de la pale sur sa longueur.

9. *Méthode de conception et de construction pour les roues TRHA* selon l'une des revendications précédentes, **caractérisée par le fait que** la lame de l'intrados des pales de l'hélice est portée par une corde qui n'est plus à 45° et permet de séparer à volonté les lames extrados et intrados au niveau des bords d'attaques et de fuites en entrée et sortie du conduit de la pale, la rigidification de l'ensemble des lames de la pale étant assuré par des entretoises (PL3, PL4) en forme de virgule profilées et orientées placées entre les lames.

10. *Méthode de conception et de construction pour les roues TRHA* selon l'une des revendications précédentes, **caractérisé par le fait que** les fibres neutres sont habillées de matière, en utilisant le principe qui construit l'aire d'une pale avec seulement 5 valeurs mathématiques données à des portions de figures géométriques qui ont un centre de référence, et sont placés de préférence en concordance, ou à proximité, des valeurs fournies par les fibres neutres générées selon la présente méthode.

## Patentansprüche

1. *Konzeptions- und Bauverfahren für Räder, die gleichzeitig: Turbine, Propeller mit Blättern, sind, die über ihre gesamte Länge hohl sind, die in kreisförmige periphere Kammern münden, die eine Funktion als angetriebene Reaktoren (THRA) aufweisen,* **dadurch gekennzeichnet, dass** es dieses Verfahren erlaubt, für jede Turbinen-, Propeller-, Reaktorbaugruppe (THRA) mit Lamellen den evolutiven Schnitt des inneren Kanals der Propellerblätter, die über ihre gesamte Länge hohl sind, zu bauen, und die auf den Profilen der neutralen Fasern der Lamellen abgestützt sind, die größtenteils Kreisabschnitte sind, und die für den Eingang der Turbine und für die Eingänge der Propeller-Hohlblätter und ihre Eintritte in ihre Kammern gebaut werden und individuell konfiguriert werden, indem zunächst den geometrischen Grundelementen Werte gegeben werden und nach bestimmten geometrischen Anordnungen auf kreisförmige Platten mit unterschiedlichen Durchmessern gezogen werden, die anschließend an mehreren Ebenen des Rades angeordnet und unabhängig voneinander winklig auf derselben Achse positioniert sind, wobei
die besondere Anordnung der geometrischen Grundelemente, die auf jede kreisförmige Platte angewandt werden, erhalten wird, indem sie in einen Kreis (C1) eingetragen wird, dessen Mittelpunkt (0), von dem ein Radius (R) mit einem gegebenen Zahlenwert ausgeht, der auf seinem Kreis (C1) trifft, einen bevorzugten Schnittpunkt (A) aufweist,
der Kreis (C1) die Rotationsfläche ist, die während der Drehung des Rades von der Vorderkante der Lamelle überstrichen wird,
ein anderer Zahlenwert der Bogensehne gegeben wird, die der Kreisabschnitt der neutralen Faser der gesuchten Lamelle ist, Das eine der Enden dieser Sehne von dem bevorzugten Schnittpunkt (A) ausgeht, und das andere (E) in dem Inneren des Kreises auf einer Achse positioniert ist, die von dem bevorzugten Punkt (A) ausgeht und einen Winkel von 45° mit dem Radius (R) bildet,
die für diese Achse rechts oder links von dem Radius ausgewählte Position die gewünschte Drehrichtung des Rades (1 oder 2), das auf dem Radius zu der Mitte platziert ist, bestimmt, ein anderer Punkt (B), der auf einem Zahlenwert liegt, der derjenige des Radius des Kreises, der das Rad (C1) umgibt, abzüglich eines Zahlenwerts ist, der die Quadratwurzel der Addition des Quadrats von zwei Halbsehnen (Pythagoras) ist,
eine Gerade mit einem Zahlenwert, der mit demjenigen der Sehne identisch ist, von dem Punkt (B) gezogen wird und in ihrer Mitte mit der Mitte der Sehne (M), zu der sie senkrecht steht, zusammenfällt und einen Punkt an ihrem anderen Ende (D) erzeugt,
der auf dem Radius (B) befindliche Punkt als Mittelpunkt mit einem Zahlenwert dient, der gleich demjenigen der Geraden (A B) für den Kreisabschnitt ist, der auf die zwei Enden der Sehne (A und E) trifft, der ihr Bogen ist, und der das gesuchte kreisförmige Profil der Lamelle ist, und
der an dem anderen Ende der Geraden (D) liegende Punkt, der die Sehne in ihrer Mitte schneidet, als Mittelpunkt dient, um den Kreisabschnitt zu ziehen, der auf die zwei Enden der Sehne (A und E) trifft, die auch ihr Bogen ist, und die das andere gesuchte kreisförmige symmetrische Profil der Lamelle ist,
**dadurch gekennzeichnet, dass** andere Kreismittelpunkte, die auf der senkrechten Geraden (B D) platziert sind, und die Durchmesserwerte verwenden, die größer oder kleiner als die Punkte B und D sind, es ihnen ermöglichen, auf die Enden der Geraden (A E) zu treffen oder nicht, und Kreisabschnitte zu erzeugen, die flachere oder gewölbtere Profile (PL1, PL2) aufweisen, aber auch von dem vorliegenden Verfahren profitieren können,
der Kreisabschnitt (PL2) nicht mit den Punkten A und E verbunden ist, wobei die Gerade (A E) auch ein verwendbares Lamellenprofil ist,
**dadurch gekennzeichnet, dass** die mit diesem Verfahren und mit den gleichen Zahlenwerten gebauten Profile auf jeder Seite des Radius symmetrisch sind,
das Mischen der Profile der Lamellen, die mit diesem Verfahren erhalten werden, es durch Einwirken auf die Parameter ermöglicht, evolutive Blätter zu bilden, die besondere Eigenschaften aufweisen,
**dadurch gekennzeichnet, dass** die Zahlenwerte der Profile der nach diesem Verfahren gebauten neutralen Fasern mathematisch quantifizierbar sind, und
**dadurch gekennzeichnet, dass** dasselbe Rad unterschiedliche Turbinenlamellenprofile und Profile der hohlen Propellerblattlamellen verwenden kann, die mit demselben Verfahren aber mit unterschiedlichen Profilen auf demselben Rad definiert werden.

2. *Konzeptions- und Bauverfahren für THRA-Räder nach Anspruch 1,* **dadurch gekennzeichnet, dass** die Platten, die die Profile der neutralen Fasern aufnehmen, die gemäß dem im vorstehenden Anspruch beschriebenen Verfahren bestimmt werden, mit unterschiedlichen Zahlenwerten von Profilen gebaut werden, die assoziiert, gemischt, teilweise überlagert, verschachtelt, konkav oder konvex oder von dem Material der Platte fest miteinander verbunden werden, um die Profile der Lamellen zu bauen, die für den Eingang des Turbos und die Propeller-Hohlblätter und den Eingang in die kreisförmigen peripheren Kammern notwendig sind, wenn die Hohlblätter nicht mehr erlauben, dass sie von dem Material der Platte zusammengehalten werden, wobei ein Ring (C1) hinzugefügt wird, um sie um die Außenseite der Platte (CO) fest zu verbinden, und umgekehrt, wenn die Propellerblätter nicht zusammengehalten werden dürfen, die Platte mit der Vertiefung der Lamellen verschwindet, und nur die Lamellenprofile der Blätter, die dann mit Material umkleidet werden, übrig bleiben und zusammengeklebt werden.

3. *Konzeptions- und Bauverfahren für THRA-Räder* nach einem der vorstehenden Ansprüche, **dadurch gekennzeichnet, dass** die Vertiefungen der Propellerblätter von Kreisabschnitten geschnitten werden, die zu dem Rad konzentrisch sind, und komplementäre Kanäle innerhalb der Propeller-Hohlblätter erzeugen, die jeweils in eine unabhängige kreisförmige Kammer münden, die das gesamte Rad umgibt, und die vorzugsweise mit Abstandshaltern und einem kreisförmigen Schlitz mit düsenförmigem Profil versehen ist.

4. *Konzeptions- und Bauverfahren für THRA-Räder* nach einem der vorstehenden Ansprüche, **dadurch gekennzeichnet, dass** der Kanal des Hohlblatts des Propellers Rohre aufnimmt, die von der zentralen Welle stammen und die sich jeweils in dem Hohlblatt oder den Abschnitten von Hohlblättern bis zu ihrer individuellen kreisförmigen peripheren Kammer fortsetzen.

5. *Konzeptions- und Bauverfahren für THRA-Räder* nach einem der vorstehenden Ansprüche, **dadurch gekennzeichnet, dass** eine nicht rotierende kreisförmige periphere Kammer mit einem Spiel im Inneren derjenigen, die drehen, angeordnet wird, und dass diese Kammer innen in zwischeneinander abgedichtete Winkelsektoren unterteilt ist, von welchen jeder von einem Kanal versorgt wird, der von einem fixen Ring kommt, der von einem Lager auf der Welle gehalten wird, und der die Kanäle zu einem Ort umleitet, der sie zentralisiert, wodurch ein Fluidantrieb zu jedem Sektor ermöglicht wird.

6. *Konzeptions- und Bauverfahren für THRA-Räder* nach einem der vorstehenden Ansprüche, **dadurch gekennzeichnet, dass** das Rad aus mehreren Teilen gebaut ist,
--- eine erste unabhängige Baugruppeneinheit aus einer ersten Platte besteht, die auf die zum Antreiben des Turbos notwendigen Lamellen trifft, und eine zweite Platte, die die Öffnungen besitzt, die zum Antreiben der Propeller-Hohlblätter notwendig sind,
--- eine zweite unabhängige Baugruppeneinheit aus einer dritten Platte besteht, von der nur die Lamellen der Hohlblätter der Propeller ausgehen, die dann auf eine vierte unabhängige Platte treffen, die die Lamellen der Propeller-Hohlblätter mit den Öffnungen aufnimmt, die zum Antreiben der kreisförmigen peripheren Kammern notwendig sind,
--- eine dritte unabhängige Baugruppeneinheit aus einer fünften Platte besteht, die auf allen kreisförmigen Kammern in Übereinstimmung mit den Antrieben sitzt, die von der vierten Platte gelieferten werden, wobei die Kammern sehr weitreichende Merkmale und Bauauswahlen aufweisen,
--- andere Platten bei Bedarf auch in der Mitte der Blätter der Propeller zwischenplatziert werden,
wobei die rotierenden oder nicht rotierenden Kammern aus druck- und temperaturbeständigen Materialien gebaut werden, indem man entweder die Art des Materials, falls es gesintert wird, allmählich evoluieren lässt, oder indem die Kammern unabhängig hergestellt, und indem sie nachher wieder unter der entsprechende Platte angebaut werden.

7. *Konzeptions- und Bauverfahren für THRA-Räder* nach einem der Ansprüche 1 bis 6, **dadurch gekennzeichnet, dass** die Platten keine flachen Scheiben sind, sondern vorzugsweise in Schalenform oder halbsphärisch oder Kegelstumpf nach oben oder unten gekrümmt sind, auf welchen möglichst nahe an ihren jeweiligen Flachstellen die Eingänge und die Ausgänge der Propellerblätter eingetragen sind.

8. *Konzeptions- und Bauverfahren für THRA-Räder* nach einem der Ansprüche 1 bis 6, **dadurch gekennzeichnet, dass** die Eingangsoberfläche des inneren Kanals der Blätter im Bereich jeder Platte unter Verwenden der mathematischen geometrischen Verfahren des Anspruchs 1 quantifiziert wird, und dass die Eingangsoberfläche jedes Blatts von der ausgewählten Blätteranzahl abhängt, die die Oberfläche der Scheibe abdecken, über die der Propeller streicht, vorzugsweise ohne dass die Blätter einander überlagern, und von der in dem Blatt enthaltenen Sehne gegebene Länge, und dass ein Oberflächenwert, der mit dem des Eingangs des Kanals gleichwertig ist, für den Ausgang des Propellerblatts übertragen wird, indem er in die kreisförmige Kammer eindringt, indem schließlich dieser Fläche ein Koeffizient zugewiesen wird, und indem dieselben mathematischen geometrischen Prozesse verwendet werden, um diese Ausgangsfläche zu schreiben, wobei diese Werte dann untereinander geschätzt werden, um das Profil zu bestimmen, das dem inneren Kanal des Blatts auf seiner Länge verliehen werden soll.

9. *Konzeptions- und Bauverfahren für THRA-Räder* nach einem der vorstehenden Ansprüche, **dadurch gekennzeichnet, dass** die Lamelle der Unterseite der Propellerblätter von einer Sehne getragen wird, die nicht mehr 45° beträgt und es ermöglicht, nach Belieben die Ober- und Unterseitenlamellen im Bereich der Vorderkante und der Hinterkante am Eingang und am Ausgang des Kanals des Blatts zu trennen, wobei die Versteifung aller Lamellen des Blatts durch profilierte und orientierte Abstandshalter (PL3, PL4) in Kommaform, die zwischen den Lamellen platziert sind, sichergestellt wird.

10. *Konzeptions- und Bauverfahren für THRA-Räder* nach einem der vorstehenden Ansprüche, **dadurch gekennzeichnet, dass** die neutralen Fasern mit Material umkleidet sind, indem das Prinzip verwendet wird, bei dem die Fläche eines Flügels mit nur 5 mathematischen Werten, die für Abschnitte geometrischer Figuren gegeben werden, gebaut wird, die einen Bezugsmittelpunkt aufweisen und vorzugsweise in Übereinstimmung mit oder nahe an den Werten, die von den gemäß dem vorliegenden Verfahren erzeugten neutralen Fasern geliefert werden, platziert werden.

## Claims

1. *A method for designing and manufacturing wheels that are simultaneously: a turbine, a propeller with blades that are hollow along the entire length thereof and which lead into peripheral circular chambers that operate as a powered engine (THRA),* **characterised in that** for each turbine-propeller-engine assembly (THRA), this method makes it possible to build with strips the scalable section of the inner channel of the propeller blades, which are hollow along the entire length thereof, and rest on the profiles of the neutral fibres of the strips that are mostly portions of circles, and which are built for the turbine inlet and for the hollowed propeller blade inlets and where they arrive at the chambers, and are individually configured by giving initial values to the basic geometric elements, and are traced according to particular geometric arrangements, on circular plates with different diameters, which are then arranged at a plurality of levels on the wheel and are positioned at an angle on the same axis independently from one another, wherein
the particular arrangement of the basic geometric elements applied to each circular plate is obtained by being inscribed within a circle (C1) from the centre (0) of which extends a radius (R) of a given numerical value that meets the circle (C1) at a preferred intersection point (A),
the circle (C1) is the surface of revolution that is swept by the leading edge of the strip during the rotation of the wheel,
another numerical value is given to the chord of the arc which is the portion of the circle of the neutral fibre of the strip in question, One of the ends of this chord starting from the preferred intersection point (A) and the other (E) being positioned inside the circle on an axis that starts from the preferred point (A) and forms an angle of 45° with the radius (R),
the position chosen for this axis on the right or the left of the radius determines the desired direction of rotation of the wheel (1 or 2), and another point (B) is placed on the radius towards the centre and located at a numerical value which is that of the radius of the circle that surrounds the wheel (C1) minus a numerical value that is the square root of the sum of the square of two ½ chords (Pythagoras),
a straight line with a numerical value identical to that of the chord extends from point (B), such that its midpoint aligns with the midpoint of the chord (M) to which it is perpendicular, and generates a point at the other end thereof (D),
the point located on the radius (B) serves as a centre with a numerical value equal to that of the straight line (A B) for the portion of the circle that stretches between the two ends of the chord (A and E), which is the arc thereof and which is the circular profile of the strip in question, and
the point (D) located on the other end of the straight line that intersects the chord at its midpoint serves as a centre for tracing the portion of circle that stretches between the two ends of the chord (A and E), which is also the arc thereof and which is the other symmetrical circular profile of the strip in question,
**characterised in that** other centres of circles located on the perpendicular straight line (B D), which have larger or smaller diameter values than points B and D, optionally allow them to stretch between the ends of the straight line (A E), and to generate portions of circles that have flatter or more curved profiles (PL1, PL2), but which may also benefit from this method,
the portion of circle (PL2) is not connected to points A and E, since the straight line (A E) is also a strip profile that can be used,
**characterised in that** the profiles built using this method and with the same numerical values on each side of the radius are symmetrical,
the mixing of the strip profiles obtained with this method makes it possible, by changing the parameters, to build scalable blades that have specific characteristics,
**characterised in that** the numerical values of the profiles of the neutral fibres built according to this method are mathematically quantifiable, and
**characterised in that** a single wheel can use different turbine strip profiles and different hollow propeller blade strip profiles that are defined using the same method but with different profiles on the same wheel.

2. *The method for designing and building THRA wheels according to claim 1,* **characterised in that** the plates that receive the profiles of the neutral fibres, determined according to the method described in the previous claim, are built with different numerical values for profiles that are associated, mixed, partially overlapping, tangled, concave or convex or joined to one another by the material of the plate, in order to build the strip profiles necessary for the turbo inlet and the hollow propeller blades and the inlet of the peripheral circular chambers, when the hollow blades no longer allow them to be held together by the material of the plate, a ring (C1) being added to fasten them around the outside of the plate (CO), and conversely, when the propeller blades do not need to support one another, the plate disappears with the recesses in the blades and only the profiles of the blade strips that are coated in matter remain and are bonded together.

3. *The method for designing and building THRA wheels* according to one of the preceding claims, **characterised in that** the recesses of the propeller blades are intersected by portions of circles that are concentric to the wheel and generate complementary channels inside the hollow propeller blades each leading into a separate circular chamberthat surrounds the entire wheel and is preferably provided with spacers and a circular groove with a nozzle-shaped profile.

4. *The method for designing and building THRA wheels* according to one of the preceding claims, **characterised in that** the channel of the hollow propeller blade receives tubes that originate from the central shaft and continue each inside the hollow blade or hollow blade portions to their individual peripheral circular chambers.

5. *The method for designing and building THRA wheels* according to one of the preceding claims, **characterised in that** a non-rotating peripheral circular chamber is placed with some clearance inside the chambers that do rotate and **in that** this chamber is internally partitioned into angular sectors that are sealed from one another, each being fed by a channel that comes from a stationary ring held on the shaft by a bearing, and which redirects the channels towards a central location that allows fluid to be fed towards each sector.

6. *The method for designing and building THRA wheels* according to one of the preceding claims, **characterised in that** the wheel is built in several parts:
--- a first separate integral assembly is formed by a first plate which connects, with the strips necessary to feed the turbo, a second plate that has the openings necessary to feed the hollow propeller blades,
--- a second separate integral assembly is formed by a third plate from which only the hollow propeller blade strips extend, which then join a fourth separate plate that receives the hollow propeller blade strips with the openings necessary to feed the peripheral circular chambers,
--- a third separate integral assembly is formed by a fifth plate that covers all the circular chambers in alignment with the inlets provided by the fourth plate, knowing that the chambers have a very wide range of characteristics and structural choices,
--- other plates may also be placed on demand between the propeller blades,
the rotating or non-rotating chambers are built of pressure- and temperature-resistant materials, either by progressively changing the nature of the material if it is sintered or by manufacturing the chambers separately and then arranging them under the corresponding plate.

7. *The method for designing and building THRA wheels* according to one of claims 1 to 6, **characterised in that** the plates are not flat discs but preferably curved upwards or downwards in the shape of a semi-spherical or frusto-conical bowl, and on which the inlets and outlets of the propeller blades are inscribed as close as possible to their respective flats.

8. *The method for designing and building THRA wheels* according to one of claims 1 to 6, **characterised in that** the inlet surface of the inner channel of the blades is quantified at each plate by using the mathematical geometric processes of claim 1 and **in that** the inlet surface of each blade depends on the chosen number of blades that cover the surface of the disc swept by the propeller, preferably without the blades overlapping one another, and the length given to the chord contained within the blade and that a surface value equivalent to that of the channel inlet is matched by the outlet of the propeller blade as it enters the circular chamber, possibly by assigning a coefficient to this surface, and using the same mathematical geometric processes to define this outlet surface, these values then being compared to one another in order to determine the profile to be given to the inner channel of the blade along its length.

9. *The method for designing and building THRA wheels* according to one of the preceding claims, **characterised in that** the strip of the pressure side of the propeller blades is provided by a chord which is no longer at 45° and allows the suction side and pressure side strips to be separated at will at the leading and trailing edges at the inlet and outlet of the blade channel, the rigidity of the assembly of blade strips being ensured by profiled and oriented comma-shaped spacers (PL3, PL4) placed between the strips.

10. *The method for designing and building THRA wheels* according to one of the previous claims, **characterised in that** the neutral fibres are coated in material using the principle that builds the area of a blade using only 5 mathematical values given to portions of geometric figures that have a centre of reference, and are preferably placed in alignment with, or close to, the values provided by the neutral fibres generated according to this method.
